# EUROPEAN PATENT APPLICATION

(11) **EP 3 769 828 A1**
(43) Date of publication of application: **27.01.2021**
(21) Application number: 20187015.1
(22) Date of filing: 21.07.2020
(51) Int. Cl.: A63F 13/803, A63F 13/65, A63F 13/28, B60W 60/00, A63G 25/00

(54) **AUTONOMOUS DRIVING UNIT RACING GAME PROVIDING METHOD AND RACING DEVICE AND SYSTEM**

(30) Priority: 22.07.2019 KR 20190088451
(71) Applicant: KSEEK CO., LTD., Daejeon 34127 (KR)
(72) Inventor: KIM, Young-Real, 34127 Deajeon (KR)
(74) Representative: Ter Meer Steinmeister & Partner

(57) **Abstract**

The present invention provides an autonomous driving unit racing game method and a racing device and a system for enjoying a safe racing game using an autonomous driving unit such as an autonomous driving vehicle or an autonomous driving drone. When the racing game starts with the passengers participating in the game on the autonomous driving racing device, the racing device displays route information and allows the passengers to perform a user mission. When mission performance information is input according to the execution of a user mission, the racing device adjusts the route information and is operated according to the corresponding route information. When the driving thereof is completed, it determines the game result based on the driving result, the user mission, and the driving mission and so on. In addition, the game server that leads the racing game is equipped with a driving terminal in the autonomous driving vehicle participating in the racing game and allows the actual driving according to the racing route information in a specific city or region. Also, the participants participating in the game use the user terminals, so that they can participate in the racing game in a way that contributes to team's victory by adjusting the route information or the maximum speed of the autonomous driving vehicle while performing the user mission such as vote, question, quiz, etc., The present invention provides a safe gamification by allowing the autonomous driving unit participating in the racing game to complete the given route information so as to announce the result of the victory or the ranking of the team. By sensing the driving condition of the autonomous driving unit, the tilting caused by the rotation of the autonomous driving unit, the vibration, the shock, etc., it outputs a 4D effect so that people who are on the remote model device receive the feeling, thereby enjoying a realistic racing game for remote participants. In addition, it suggests technologies that provide a racing game service that expresses virtual obstacles in augmented reality and outputs noise and vibration generated by collisions or obstacles with 4D effects.

## Description

### Technical Field

The present invention relates to a method and a system for providing a racing game based on an autonomous driving unit to provide a racing game using an autonomous driving unit such as an autonomous driving vehicle, an autonomous driving drone, and a robot to a participant using a user terminals.

In more detail, the present invention relates to a method and a system for providing an autonomous driving racing game to a plurality of participants in which a participant participating in a racing game based on an autonomous driving unit performs a participant mission using a participating terminal or a user terminal receives a result of performing a specific user mission to the game server, and the game server that received the information on the result of the mission performance adjusts route information of the autonomous driving unit corresponding to the participant or a driving terminal connected to the autonomous driving unit according to assessment of performance of the user mission.

In addition, the present invention relates to a method and a system for providing an autonomous driving racing game in which, when the driving terminal receives the adjusted route information and the autonomous driving unit completes driving according to the route information, a ranking or a victory/defeat of a specific participant or a specific team is determined in consideration of a time taken for autonomous driving or a score or points obtained through a user mission or a driving mission or whether the autonomous driving unit has completed the route information in a racing game.

In the whole specification, the participant refers to an individual participant in a racing game belonging to a specific team. The participants participate in a match with at least one autonomous driving unit through the team. In the specification, the participant is also used to represent the team, which is a basic module for participating in a racing game in which one or more participants belong.

In the whole specification, the "competitor" means a team that competes for a specific team or a specific participant participating in the same game for a victory or rank, team participants, or a third party capable of having a competition record. Here, the third party capable of having the competition record may be a person or AI technology. That is, in the racing game in the present invention, teams including people can also be matched by racing games against teams driven by the AI.

In the whole specification, the expressions such as "participant's autonomous driving unit" or "team's autonomous driving unit" mean an autonomous driving unit that matches a specific participant or a specific team. The autonomous driving vehicle is interlinked with a driving device or matched with the driving device in an integrated form.

In the whole specification, the "driving mission" means the work that an autonomous driving vehicle must perform during the racing game. It includes a photo mission that takes a picture containing a specific location or object, a stop mission that stops a driving for a certain period of time, and a transportation mission for carrying people, objects or animals on and off.

In the whole specification, the "model device" is a device that matches a specific autonomous driving unit and has a driving device. It outputs driving state information of the autonomous driving unit by means of a 4D effect.

In the whole specification, the "user mission" is a task that a specific participant needs to perform. It includes a voting mission in which several people decide opinions by voting, a quiz mission for solving the quiz, a voting mission in which multiple people ask for opinions, a photo mission that takes a picture of specific requirements, and an action mission for performing specific actions.

In the whole specification, the "route information" is information including driving targets and driving conditions etc. for all and each section that a specific autonomous driving unit must complete in a racing game. The information on the driving target includes a specific target point, a driving distance, a time limit, a number of performances of the driving mission or the user mission, or a target value of score etc.

The driving conditions included in the route information may include a maximum driving speed, a fuel information, a driving mission, and a map information etc. The fuel information or the maximum driving speed is virtual data managed for game progress, not actual fuel information of a specific driving device or actual maximum driving speed on a real road.

In the whole specification, the 'target point' means information related to a location to which the autonomous driving unit should go. The target point can be represented by a fixed location, such as addresses or coordinates of a building or a geographic feature. Also, it can be represented by a current location of a moving person or object, or a moveable future location. The autonomous driving vehicle may set a specific target point as a driving target by approaching within an effective distance from a specific target point or moving away from an effective distance or more. The effective distance of a specific target point may be a physical distance expressed in km, m, or the like, or an access distance within a predetermined time required to go to a road or an access path etc. The target point may be called as a stop point and a finish point according to the driving type.

In the whole specification, the "driving state information" further includes the actual information of the autonomous driving unit such as a driving speed of the autonomous driving unit, a vibration on the road surface, a posture information, an acceleration and deceleration, a direction change, an actual fuel amount, a driving start, a driving end, and a current position etc. and the virtual information such as a virtual obstacle displayed in a racing game, a collision with an obstacle, and a virtual uneven effect or vibration according to an obstacle.

In the whole specification, the autonomous driving unit does not mean only an autonomous driving unit that is not driven by a person. Even if a person, who is assigned to a specific driving device, directly drives, it has a form that the participant does not directly participate in driving, and is considered as an autonomous driving unit in which a driver and a driving device are combined.

In the whole specification, the 'user terminal' transmits and receives data through the game server and the network communication means, receives mission performance information about the user's mission of the participant, and transmits it to the game server. The user terminal has a function to output information related to the racing game.

In the whole specification, the 'driving terminal' is a terminal that transmits and receives data to and from a game server through a network means and allows an autonomous driving unit to operate according to the route information.

The driving terminal (300) may be configured to be connected to the autonomous driving unit by a network means or may be configured to be integrated with the autonomous driving unit.

In the whole specification, the 'mission performance information' refers to information including data transmitted to the game server as a result of performing a mission on the user mission or the driving mission. If there is a referee, it may be the result value input by the referee. In a quiz mission or a voting mission, the answer selected by the user becomes the mission performance information.

In the whole specification, the expressions such as 'what of the team', 'what of the driving terminal', and 'what of the autonomous driving unit' may be the same expression. In the racing game, the team, the driving terminal, and the autonomous driving unit are connected equally one by one, so the expression 'route information of the team' is synonymous with 'route information of the autonomous driving vehicle' and 'route information of the driving terminal' connected to the team. The 'driving state information of the team', the 'driving state information of the autonomous driving unit' and the 'driving state information of the driving terminal' are also used equally for the connected team, the autonomous driving unit, and the driving terminal.

In the whole specification, the 'game server' includes a game operation module for operating the racing game of the autonomous driving unit, and is connected to the participant terminal and the driving terminal by a network method. The game operation module adjusts the route information of the autonomous driving unit according to whether the participant performs a user mission or not.

In the whole specification, the 'network communication means' refers to a wired and wireless network communication method. There may be a form mixed in a wired wireless section. Also, various protocols can be used therein. It refers to communication techniques such as Internet, 5G communication, 4G LTE communication, and Bluetooth, or a combination of them. As an extended concept of the network communication means, the configurations, in which the driving terminal outputs voice or sound and the driving vehicle can receive and recognize a corresponding voice or sound as a command, may also be included.

### Background Art

As a conventional technology in this field, there is a racing game using a vehicle. The vehicle racing is already widely implemented worldwide. These driving races are mainly conducted in the same driving path in the form of comparing the performance of the vehicle type or the driving technology of the driver and the vehicle that passes the completion point first wins. In a given section, the vehicles run at the maximum speed, so it is common to control traffic to prevent the ordinary car from entering the racing section because of the risk of accidents when playing on a regular road.

In 2017, Robocar, the world's first autonomous driving vehicle for racing purposes, was launched and is participating in general car racing. The advent of autonomous driving vehicle for racing, which can be compared to ordinary cars driven by the driver's intuition, has further been promoted technological development in this field.

Recently, a racing game is held in which only autonomous driving vehicles participate. The autonomous driving vehicle racing game is a game that determines which autonomous driving vehicle completes driving quickly on the same route information. However, these racing games are generally configured to compare the autonomous driving performance of autonomous driving units.

These conventional technologies are conducted in the form of comparing the performance of a driving technique or a vehicle. However, it is impossible to provide a safe racing game in which participants compete through mission performance and, as a result, adjust the route information of the autonomous driving unit as in the present invention.

### Disclosure

### Technical Question

It is predicted that with the fourth industrial revolution, led by self-driving cars, people will be freed from the labor of driving that requires a lot of time. There is a great possibility that human labor time will be greatly reduced also in other fields, and there are concerns about using more leisure time in the future. The present invention was designed to provide a safe racing game that can be enjoyed by using autonomous driving units such as autonomous vehicles and autonomous drones.

The present invention provides a racing game that allows an autonomous driving unit to drive safely while complying with traffic regulations by adjusting route information of the autonomous driving unit based on the collective intelligence between participants or competition for intelligence instead of the racing game based on the driving performance of a vehicle or a driver's driving ability like a conventional car racing or autonomous car racing.

The present invention provides a racing game that can be safely performed while driving with ordinary cars on a general road that is not separately controlled for racing games.

In the case of autonomous vehicles, it is possible to recognize road conditions and signaling systems and provide safer driving services with the development of artificial intelligence (AI). The present invention provides a safe racing game by improving the stability of the racing game by allowing participants participating in the racing game not to participate in the driving of the vehicle directly and implementing a racing game of an autonomous vehicle through the activities of the participants.

The problem to be solved by the present invention is to solve a technical problem for constructing a gamification using an autonomous vehicle so that many people can enjoy leisure in the future and to realize a profitable business that includes this process.

### Technical solution

In order to solve the above problem, the present invention suggests a method for providing a racing game using an autonomous driving unit, including outputting route information of a specific autonomous driving unit participating in the racing game; receiving mission performance information for a user mission which a participant or a team is to perform; adjusting the route information by referring to the mission performance information; applying the adjusted route information to driving of the autonomous driving unit; and determining a result of the driving of the participant or the team.

In addition, the present invention suggests a racing game providing system and a method based on an autonomous driving unit including a user terminal that performs a user mission through a number of participants online, a game server that receives the mission performance information from the user terminal and adjusts the route information of the autonomous driving unit with reference to the mission performance information, and a driving terminal that receives the route information adjusted from the game server and reflects it in the driving of the autonomous driving unit.

Additionally, the present invention suggests a racing game providing system and a method based on an autonomous driving unit further including a model device for receiving the driving state information and the route information of the autonomous driving unit and outputting a 4D effect of driving state information.

In order to solve the above problem, the present invention further suggests a step of performing a user mission in which the users participate in a quiz, a question, a vote, etc. in several stages at the same time or watch an online advertisement; and a step of adjusting route information with the collective intelligence of multiple participants. Also, it further proposes a step of adjusting the route information of the autonomous driving unit in a way that the game participants participate in quizzes, questions, voting, etc., scores them, or refers to the results of analyzing answers or choices of users.

The present invention further suggests a step of performing the user missions such as quiz games, question or voting, cheering, and functioning items for a plurality of participants, a step of providing driving missions to the driving terminals, and a step of determining whether these missions are performed or not.

In order to solve the above problems, the present invention proposes a racing game providing system and a method based on an autonomous driving unit in that the participant boards an autonomous driving unit and performs the user mission through the user module or the user terminal, the game server or the game module adjusts the driving path, and the driving module allows the autonomous driving unit to operate according to the adjusted driving path.

Preferably, wherein the user mission may be a voting mission and the mission performance information is a result of voting of a plurality of participants.

Preferably, the adjusting of the route information may include adjusting the route information by using collective intelligence of the plurality of participants.

Preferably, the method may further comprise acquiring, by a driving terminal, a video information and transmitting the video information to a game server, a user terminal or a broadcast relay device.

Preferably, the method may further comprise receiving and outputting, by the broadcast relay device, the video information.

Preferably, the method may further comprise receiving and outputting, by a user terminal, the video information.

Preferably, the method may further comprise outputting, by a driving terminal or a user terminal, driving state information.

Preferably, the method may further comprise outputting, by a model device, a 4D effect of driving state information.

Preferably, the method may further comprise receiving, by a driving terminal, virtual driving state information.

Preferably, the method may further comprise outputting, by an autonomous driving unit connected to the driving terminal, a 4D effect corresponding to the virtual driving state information.

Preferably, the method may further comprise receiving, by a user terminal, video information from a game server; and outputting, by the user terminal, the video information.

Preferably, the method may further comprise giving an attack right or an avoidance right to a specific participant or team through a user mission.

Preferably, the method may further comprise reflecting a result of driving to determination of a game result.

Preferably, the method may further comprise reflecting, by a game server, a performance result of a specific driving mission or a performance result of a specific user mission driving to determination of a game result.

Preferably, the method may further comprise reflecting, by a game server, a performance result of a user mission given to a specific participant or team to determination of a game result.

Preferably, the method may further comprise adjusting, by the game server, route information of a specific driving terminal as a user or team receives a penalty or uses an attack right.

In another aspect a racing device is provided for providing a racing game using an autonomous driving unit, wherein the racing device is configured to: output route information for the racing game; adjust the route information based on mission performance information of a user mission; perform autonomous driving based on the adjusted route information; determine a result of driving as to whether driving is performed according to the route information; and determine a game result of the racing game.

Preferably, the racing device may additionally outputs a 4D effect of driving state information.

In another aspect a racing game system is provided for providing a racing game using an autonomous driving unit comprising: a game server configured to output route information for the racing game, adjust the route information based on mission performance information for a user mission, transmit the adjusted route information to an autonomous driving terminal, determine a result of driving as to whether driving is performed according to the route information, and determine a game result of the racing game; and an autonomous driving terminal configured to receive the adjusted route information, and apply the adjusted route information to autonomous driving of the autonomous driving unit.

Preferably, the game server may be a game server that transmits driving state information to a model device.

Preferably, the system may further comprise a model device configured to receive the driving state information and output a 4D effect.

Preferably, the racing game system may further comprise a user terminal configured to receive user mission performance information to transmit the user mission performance information to the game server.

### Advantageous Effects

According to the present invention, it is possible to provide a racing game using autonomous driving units in which a large number of participants participate. That is, it is possible to provide a racing game of autonomous driving units in a city area where a plurality of participants participate simultaneously.

In addition, when the present invention is linked to TV and Internet broadcasting technologies, it is possible to produce an entertainment game show in which a large number of viewers or cast members become participants and participate in a racing game by using mobile phones as user terminals and autonomous vehicles corresponding to the participants are driving in specific cities.

Autonomous vehicles and autonomous drones are on the rise among the most popular fields in the fourth industrial revolution. Autonomous vehicles are expected to significantly change the consumption pattern of automobiles, and it is expected that car sharing will become frequent, and car manufacturers and electronics companies willing to manufacture electric vehicles are expected to compete, but the overall consumption of automobiles is expected to decrease. Accordingly, the entertainment business using autonomous vehicles and autonomous drones has an aspect of being easy to be sponsored by or to promote business in joint with car manufacturers or a number of companies planning to produce electric vehicles.

In addition, it is possible to promote technological development through functional competition of the autonomous driving units by participating in racing games based on autonomous driving units such as autonomous vehicles or autonomous drones in leisure life, and enhance consumption of autonomous vehicles.

### Brief Description of Drawings

The above and other objects, features and advantages of the present invention will be more apparent from the following detailed description taken in conjunction with the accompanying drawings, in which:
FIG. 1 illustrates a system configuration diagram according to one embodiment of the present invention;
FIG. 2 shows a schematic diagram of a user terminal used by game participants;
FIG. 3 shows a schematic diagram including a game studio that proceeds with a racing game; and
FIG. 4 show a schematic diagram of a racing autonomous vehicle that provides a racing game alone.

### [Reference Signs List]

100: game server
200: user terminal
300: driving terminal
400: game studio
410: model device
420: broadcast relay device
500: racing autonomous driving unit
600: game area (city or region)

### Best Mode

### Mode for Invention

The present invention may be configured as follows various embodiments.

In a first embodiment of the present invention, an autonomous driving unit transmits and receives data to and from a driving terminal through a network communication means, a user terminal used by a participant participating in a game transmits and receives data to and from a game server through the network communication means, and the game server including a route information adjustment module is on the communication network. As a modification of the present embodiment, it is also preferable that the autonomous driving unit and the driving terminal are configured as one machine. In this case, the autonomous driving unit is considered as the driving terminal.

When the autonomous driving unit and the driving terminal are separated from each other, the autonomous driving unit includes an input device through which a person perform input, or a device that updates and output the latest route information to a person when the person performs driving in addition to a method of performing connection through a communication means.

In a second embodiment of the present invention, the autonomous driving unit transmits and receives data to and from the user terminal through the network communication means, and the game server (100) including the route information adjustment module is included in the user terminal (200).

A racing game is provided by allowing a specific participant to play a racing game using a user terminal installed in a specific place and matching an autonomous vehicle connected for the racing game to the user terminal (200).

In this case, the user terminal (200) transmits and receives data to and from the driving terminal (300) through the network communication means without passing through a separate server. The user terminal (200) is allowed to prepare information regarding route information and a user mission to be performed by the user in advance.

The user terminal (200) may provide a game that ranks a number of participants participating in the game at different times using the same single autonomous driving unit based on the time taken to complete given route information or the score obtained from driving missions while driving. Alternatively, a racing game may be provided using combinations of autonomous driving units and user terminals in which multiple competitors participate simultaneously.

The game server (100) is provided with scenarios for various types of racing game configurations and user missions, driving missions, and the like corresponding thereto. To this end, key information such as driving state information and route information are frequently transmitted and received to and from a driving terminal, a participant terminal, a broadcast relay device, and a model device.

A specific autonomous driving unit may correspond to at least one user terminal, and the specific user terminal may correspond to at least one autonomous driving unit. One or a plurality of autonomous vehicles may participate in a specific racing game.

As another embodiment of the racing game, a specific participant allows a single autonomous vehicle to complete a specified route information within a specified time using the user terminal (200), and the result of the game may be determined as success/failure.

As still another embodiment of the racing game, there is a racing game in the form of a chase game in which a specific participating team tracking a specific running team arrests the running team through a user mission. The success/failure is determined based on whether the team is close to the running team, how much has a distance been narrowed down, and whether the running team's vehicle is captured by a camera. Alternatively, it is also determined by determining ranking considering the time taken relatively, the difference in final distance or the like.

It is also preferred, as another racing game, when a specific participant allows a single autonomous vehicle to pass through specified route information using the user terminal (200) within a time limit, and a number of participants perform the same in sequence, to compare the times taken for driving or the scores obtained through the autonomous driving units' driving missions or the participants' user missions to determine the ranking or decide victory and defeat. In this case, the distance to be moved or the time limit must also be included in the route information.

Still another racing game may be configured in such a manner that a plurality of autonomous vehicles of the same vehicle type is provided and multiple participants compete in the same driving course at the same time.

Still another racing game may be configured in such a manner that a plurality of autonomous vehicles of different vehicle types is provided and multiple participants compete in the same driving course at the same time.

Still another racing game may be configured in such a manner that a plurality of autonomous vehicles is provided and multiple participants compete in the different driving courses at the same time.

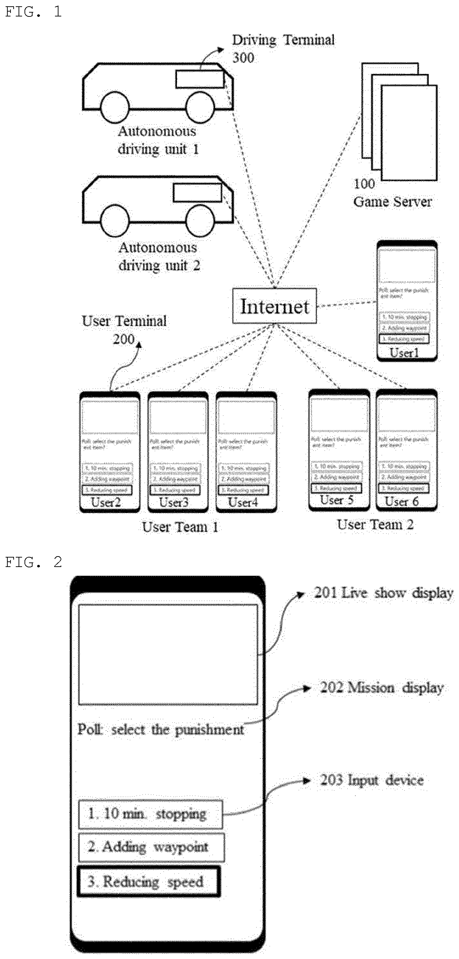

The configuration of the present invention will be described with reference to FIG. 1.

FIG. 1 illustrates a configuration of the present invention in a case where two autonomous driving units on which two driving terminals (300) are respectively installed, an individual participant 1, a user team 1, and a user team 2 simultaneously participates in the racing game through network means passing through Internet. The game server (100) is separately configured as an Internet communication means.

The user terminal (200) of FIG. 1 may be configured to perform a user application on a smartphone, tablet PC, PC or the like, or to drive software on technical hardware for a terminal. To install a user application on a smartphone, tablet PC, PC, or the like, it is necessary to produce an application, download and install the application through the Internet, and then allow the application to be used.

It is desirable that the application has a function of receiving data from a game server and transmitting data to a game server to perform a function of a user terminal, a function of receiving mission performance information of a participant, a display function of displaying mission performance results or mission information to a user or playing a video or image information received from the game server.

The function of the game server (100) may be configured as roles of a web server, and a part of a user terminal or a driving terminal may be configured to be implemented by execution of a web browser.

There is no standard limited for a video received from the game server (100). It is configured to support 360VR video or real-time streaming video data.

In FIG. 1, the game server is configured in such a manner to install and configure an application on a computing terminal such as a PC, a tablet PC, and a smartphone, and a game server may be configured by developing and installing an application to perform a game server function.

The game server (100) is capable of transmitting and receiving data to and from a user terminal of each participant through a network communication means.

The game server (100) is provided with an appropriate function by combining one or more of the following four methods to determine whether it arrives, passes through, starts, stops, finishes, or the like with respect to a specific target point.

First, it is configured in such a way to perform check and transmit check results to the game server (100) by including a separate device equipped with a sensor and a camera capable of performing measurement at a specific position (road, bridge, building, or specific site). Second, it is configured in such a way that a referee performs identification and judgment for each target point and transmits the determination result using the driving terminal, the user terminal or another terminal, and the game server (100) receives them.

Third, it is a method of receiving and determining driving state information including information capable of identifying a specific position from the driving terminal at the specific position.

Fourth, it is determined whether the position is a position of an object moving over time and is close to that position. In this case, it is a method of collecting information such as a GPS or addresses for the position of a moving object and determining whether an arrival or access is valid by identifying a current position of an autonomous driving terminal.

When the game server (100) identifies that it is in the area of a specific position or within a valid range for the specific position, the game server (100) performs processing such that it has passed or is approaching. The valid range may be one of a physical position, a position that it is to arrive at a specific valid time, and a position where a specific target can be identified with image data.

The game server (100) starts a racing game for the participants of each team who has accessed the game server (100) for the racing game, and finish the racing game of a specific team when a specific team has completed or due to the participant or team's intention to give up or end the game in the middle of the game, time out and a loss of qualification, etc.

The game server (100) transmits the 360VR video or HD video to the user terminal (200) or the driving terminal (300). In this case, the video may be a video received from the participant's autonomous driving unit, or may be a video including a video received from the driving terminal or the broadcast relay device.

The driving terminal (300) attached to the autonomous driving unit in FIG. 1 is configured to transmit and receive data to and from the game server through the network communication means. The driving terminal may be configured, in an HW aspect, in an integrated manner with the autonomous driving unit or may be configured separately from the autonomous driving unit. Alternatively, the driving terminal and the autonomous driving unit exist separately, but it is also necessary to configure the function of the driving terminal in cooperation with the autonomous driving unit.

The driving terminal (300) is provided with a display and an input device, and perform functions of the driving terminal by manufacturing, installing and executing an application capable of performing the function of the driving terminal.

It is also possible that the driving terminal (300) is operated with a dedicated HW device and SW.

The driving terminal (300) additionally includes a driving module capable of generating a 4D effect based on driving state information in which collision, acceleration, and tilting of the autonomous driving unit are associated with sound, light or the like outside the autonomous vehicle.

When the driving terminal (300) receives the driving state information related to the virtual 4D effect from the game server (100), the driving terminal (300) is configured to operate the driving module such that people who board the autonomous driving unit feel the effect.

The driving terminal (300) are additionally equipped with functions of, for example, a GPS sensor, a gyro sensor, and a camera (including a 360VR camera) or collects driving environment and related information through a relevant sensor function of the autonomous vehicle, includes and manages them in the driving state information, and allows them to be shared with the game server and the user terminal.

When the driving terminal (300) is difficult to be integrated with the autonomous vehicle, and is impossible to connect to the autonomous vehicle through the network means, the driving terminal (300) preferably includes a means for outputting route information. That is, the driving terminal (300) outputs changed route information through an output device such that the changed route information is recognized by a person and reflected in the driving of the autonomous driving unit.

The driving terminal (300) is provided with a means for identifying whether a specific target point has been approached, and includes and manages the related information in the driving state information. The driving terminal (300) uses a method of performing sharing by utilizing the devices of the autonomous vehicle or uses an AI technology capable of recognizing a specific object such as a symbolic building or signboard by electronic tag recognition, GPS, and learning by itself.

The driving terminal (300) further includes a module capable of measuring or receiving input of surrounding environments of the autonomous driving unit, that is, vibration due to a road surface, rising, dropping, position or altitude, posture and direction, surrounding image, surrounding sound, or the like, obtains the driving state information from the module, and transmits the driving state information to the game server (100).

The driving state information further includes starting and stopping, a moving speed, a current position, and result information resulting from driving through route information in section units.

If necessary, the driving terminal (300) transmits the driving state information to the user terminal (200) or the model device (410). The driving state information may be configured to be transmitted to the user terminal (200) and the model device (410) via the game server (100) or directly.

The game server (100) may be further configured to include virtual driving state information related to a penalty in the racing game in the driving state information in addition to being measured or input from an actual driving terminal and transmit and receive related information to and from the driving terminal (300), the model device (410) or the user terminal (200) to share the related information.

The game server (100) applies a penalty to a specific driving terminal according to a specific driving mission or a user mission failure, or the use of the attack rights of a competitive participant or a competitive team.

The penalty is performed in a direction disadvantageous to driving of the specific autonomous driving unit, such as to cancel the previous driving of the two stages so that the autonomous driving unit is driven again, or to delay time or to reduce fuel. The game server is configured to additionally include penalty information in the route information.

The penalty information in the game server (100) includes a user mission or a driving mission necessary to pass the penalty. The penalty may be configured in such a manner to add obstacles to certain route information such as rocks blocking the road, traffic obstacles such as people or animals crossing the road suddenly, or large low-speed vehicles blocking the road suddenly.

To the user mission for the obstacle, a user mission may be linked, which removes the obstacle by repeating a specific action or sending a heart mark or clears the obstacle by using an avoidance right.

The game server (100) is provided with a method of destroying the road while driving by an attack such as a bomb or a missile as a penalty. What is listed here, which are virtual objects, may be displayed through the screen of augmented reality or 4D effects.

The game server (100) may further include attack rights information and avoidance rights information in the route information. The attack rights include elements that helps a specific team or participant to hinder driving according to competitors or competitors' route information. The participants can purchase or exchange the attack rights or avoidance rights from the game server by giving cryptocurrency or points or obtain them through user missions or driving missions.

It may be further configured to allow a user to use points and currency to remove driving obstacles of the autonomous driving unit or to purchase an item that removes the driving obstacles.

To allow the user terminal to use the attack right or the avoidance right, an appropriate input device and input procedure are provided in the user terminal. It is also preferable that the attack right is provided such that the penalty can be exercised to a specific competitor. The avoidance right is configured to be used in the form of omitting the penalty or a specific driving mission.

The virtual driving state information is included to display obstacles that does not exist on the actual route information, but is virtually prepared, floor irregularities, raining, animals, or related events or phenomena. The user terminal (200) or the broadcast relay device (420) outputs augmented reality (AR) that displays a virtual obstacle on the real screen.

The model device (410) outputs 4D effects, such as vibration effects, spatial deformation such as left and right tilting, rollover, collision and distortion, ambient noise, contrast, and shock, related to driving state information of a specific autonomous vehicle including the virtual driving state information.

The driving terminal (300) further includes a video camera and a microphone module, and if necessary, obtains audio data, images, and videos from the inside or outside of the autonomous driving unit and transmits them to the game server (100), the user terminal (200), or the model.

It is also preferable that the game server (100) is configured to additionally include a separate server in charge of a video streaming function, so that a plurality of servers perform roles of the game server in functional units.

It is also possible to install one application on a smart terminal and use the application as the driving terminal (300) or the user terminal (200). In the present invention, the driving terminal (300) and the user terminal (200) are not necessarily provided separately, and, when performing the roles specified in the object to be achieved in the present invention, may be used to distinguish the driving terminal (300) or the user terminal (200).

Participants in the racing game need to receive and perform user missions such as quizzes and questions from the game server (100). The game server (100) is configured to match the autonomous driving unit to a specific team or a specific participant through a quiz game or a question, or to deprive the participation opportunity.

The game server (100) transmits quiz information such as a subject type, the multiple choice type, and the OX type to a user terminal, and the user terminal receives the quiz information and provides an input means for a specific participant to solve the quiz. When the participant inputs an answer, the user terminal (200) transmits mission performance information including the entered answer to the game server (100).

The game server (100) includes a step of adjusting specific route information by referring to the mission performance information received from the user terminal (200). When the mission performance information is the answer of a specific quiz, the game server determines whether the answer is the correct answer to determine whether the mission is performed and adjust the route information in an advantageous or unfavorable manner.

It is necessary to configure such that the game server (100) uses information input by a specific referee as judgment contents when determining whether the mission has been performed. As an alternative method of referring to mission performance information, it is also possible to apply collective intelligence in such a way as to make or receive many choices based on a number of mission performance information.

As a method of using collective intelligence based on mission performance information, a method of specifying one most or second most selected through a voting mission, or allowing many participants to input specific keywords related to a specific object and determining an item connected to the specific keywords input by the many participants. When "Buyeo" is the most frequently issued for the user mission "Please enter the city that comes up when you hear Baekje," the "Buyeo" is addd as a target point or the "Buyeo" is removed from the existing target points.

The game server (100) may adjust route information of the specific driving terminal in various ways. The route information is adjusted through methods such as a method of specifying the maximum driving speed, a method of extending a driving expiration time or reducing a required time, a method of stopping the driving for a certain period of time, or a method of giving a specific penalty or giving an attack right.

The game server (100) adjusts the route information through a method of performing a voting mission to utilize the collective intelligence of the participants and driving in a predetermined direction from a specific driving point, a method of adding to pass a specific destination of cancelling, and a method of selecting one of a plurality of route information and performing driving.

The specific driving point may be a forked road encountered while driving or may be a turning point, and driving in the predetermined direction is to select one of two or more forked driving routes, and may be one of the methods of passing through a crossroad by making a left turn or right turn or and making a U-turn and coming back.

The game server (100) adjusts the driving information in such a way that a virtual object or an obstacle is introduced as a use of a penalty or an attack right or an incident or in such a way of manipulating accidents a collision with a virtual object or an interference with driving.

In the performance of the voting mission, the game server (100) transmits a voting question to the user terminal (200), and the user terminal (200) receives the voting question and outputs it, receives the voting value from the user, and transmits the voting value to the game server (100) as mission performance information.

The game server (100) is configured to adjust the route information through a process of determining the mission performance information by adopting a method of receiving the voting values and calculating an average, selecting the highest value, or the like. The voting mission is configured to be received from specific participants, specific teams, or participants belonging to teams.

User missions are not limited to quizzes and voting. In a case where a mission is to draw the shape of a certain trajectory in a space, when the user terminal is able to receive or measure the trajectory movement of the space, a motion mission that determines that the mission has been performed within a certain error range is additionally configured.

The user mission may further include a photo mission such as a method of taking a photo at a specific position or taking a picture of a specific object or with a specific person, or an action mission such as a method of capturing or clicking a specific AR item using a smartphone function shown at a specific location or object with augmented reality (AR).

The user mission may adopt a method of singing a part of a specific song. A function that receives a human voice using a microphone and determines in a game server or a user terminal may be included. It is also possible to allow the person performing the determination to input the determination result.

In order to perform the photo mission, the participant terminal (200) is equipped with an AR-compatible image display function or additionally acquires automatic object recognition or location information when taking a picture or video, and makes data from them.

In response to the motion mission, the user terminal (200) may further include a function of tracking coordinates with a sensor capable of measuring coordinates or movement. It is also necessary to configure equipment such as cameras, 3D cameras, and motion capture for additional user missions.

When a participant boards the actual autonomous driving unit, the game server (200) allows the participant boarding the autonomous vehicle to perform a separate user mission. In this case, it is configured to allow the participant to use a separate user terminal (200) or to use a function of the user terminal combined with the driving terminal (300).

A configuration in which the driving terminal (300) and the user terminal (200) and the autonomous driving unit are combined together is also possible. In this case, a single or multiple participants board the autonomous driving unit to perform a user mission and enjoy the racing game.

As the user mission, a photo mission of taking a photo of a smiling face or taking a photo with a specific animal or plant may be configured. In this case, an image analysis function for determining the smiling face of a person needs to be additionally configured in the game server (100) or the user terminal (200).

As the user mission, an action mission of yelling at a constant voice level, singing a song of specific sections, or playing music of specific sections may be added. In order to apply these missions to the game, it is necessary to additionally employ a technology that recognizes and determines sound or speech.

The game server (100) configures a method for determining a user terminal that performs a mission or transmitting only a result of the determination to the game server.

As another method for the game server (100) to process the mission performance information, it is preferable to apply a method in which the terminal transmits data obtained in the course of the mission performance to the game server and the game server determines whether the mission has been successfully performed, but it is also possible to have the user terminal (200) determine the mission performance result or transfer the mission performance result received from a referee to the game server (100), and the game server (100) may use the result as it is.

In the above determination process, it is possible to determine results by ranking measured values such as the number of persons smiling, who made a bigger smile, or who made a louder sound in taking a photo during the user mission.

The game server (100) accumulates and manages scores related to driving missions, user missions, driving, and the like, for each team and each participant.

The game server (100) further performs a step of aggregating and analyzing the results of performance of the user mission. When the user mission is voting, it is possible to analyze the voting results and adopt one which is most selected or is selected as a specific ranking specified as a result. It is a work step of identifying the team of a participant who have completed the user mission first or the like. Alternatively, it may be configured to analyze which team has given correct answers at the highest percentage in the quiz mission, or which team has the largest number of points in the quiz mission.

The game server (100) further includes a step of reflecting the result of the user mission performance. In this step, the game server (100) is provided with a means to separately manage points, attack rights, and avoidance rights for each participant and team, and provides benefits such as prizes and cash to specific participants or teams in connection with performance of user missions, or announce the results.

The game server (100) further includes a step of reflecting a result of performing a specific user mission or driving mission in adjusting route information. It is possible to apply a method in which, when failing a specific quiz mission, the maximum driving speed of a specific autonomous driving unit is reduced or, when succeeding a mission, the speed is recovered. Alternatively, it is possible to adjust in a manner of increasing or decreasing the fuel information of the route information.

The game server (100) is configured to allow the user terminal (200) to purchase fuel with virtual currency or items and, when the fuel is purchased, adjusts fuel information included in the route information of a specific autonomous driving terminal.

The game server (100) may apply a penalty to a team that has not completed the route information of a specific section. When the time specified in the route information of a specific section is exceeded, fuel may be reduced, a new route may be added, or an obstacle may be added depending on a time exceeded.

In FIG. 1, the present invention may be configured as an example of a configuration for a racing game in which team 1 and team 2 are connected to the autonomous driving unit 1 and the autonomous driving unit 2, respectively, and are operated simultaneously. Here, the autonomous driving unit 1 and the autonomous driving unit 2 are autonomous vehicles of different models manufactured by different automobile manufacturers.

The user team 1 has three participants, user 2, user 3, and user 4, and the user team 2 includes two participants, user 5 and user 6.

The game server (100) provides a simple quiz mission to assign two autonomous vehicles of different models to the teams. The quiz mission is a subjective question and presented to the user terminals of five participants at the same time. The five participants input an answer which they think as the answer, and the user terminals transmit the answers to the game server. The game server (100) gives the team of the participant who first gave the correct answer an authority to select one among the two autonomous vehicles.

Assuming that user 3 gave the correct answer, the game server (100) presents a voting mission for selecting one of two autonomous driving units to all members belonging to the team 1. The voting is closed within a limited time, and the game server (100) assigns a vehicle model most selected to the team 1 and the remaining vehicle model to the team 2.

The game server (100) may assign two route information from among two or more route information to the teams through such mission performance method.

The game server (100) prepares and stores a plurality of route information. The route information may be determined by including one or more target points in a driving target. When there are multiple target points, the order thereof may or may not be determined. When there is only one target point, it is an end point. When there are multiple target points and the order is determined, the last target point is the end point and the remaining target points are stopover points.

The game server (100) may include a plurality of target points in the driving target, and the driving target may be also set in the form of driving through all of some of the target points. In this case, when the order of the target points is not determined, the target points to be driven through the user mission is selected or the order thereof may be determined.

The game server (100) performs preparation to include a driving target set in the form of including a part of a driving distance, a time limit, a driving mission performance target, and a user mission performance target in the route information.

The game server (100) configures mission information related to initial fuel information, a speed limit, a user mission, a driving mission, and map information as necessary, and performs preparation by including them in the route information.

The game server (100) assigns route information to each autonomous vehicle, and the autonomous vehicle starts driving according to each route information.

The game server (100) allows each team to designate attack and avoidance rights. It is preferably designed to give attack and avoidance rights as gifts when completing a user mission or driving mission.

In the racing game, the attack rights enable each team to interfere with the opposing team's driving by adjusting the route information of the opposing team in a manner of stopping the opposing team for a certain time, having them to encounter a virtual obstacle while driving, adding a specific target point, or the like.

In the racing game, the avoidance rights are provided in a form of skipping the driving of the route information in some sections or invalidating a specific obstacle.

Related information is transmitted to user terminals belonging to a team such that all or part of the members of the team 1 may use the attack right and the avoidance right, and the user terminal (200) has output and input functions to select an attack target so as to use the attack right or permit the use.

The game server (100) needs to be configured to designate a specific participant for each team as a leader of the team and to be an object which an attack or avoidance right or a user mission or driving mission is to be performed. It is also possible to perform a voting mission in a step where a specific participant is determined to be a leader of the team, and it is desirable that some of the performers are in charge when making a game broadcast.

The game server (100) may provide a voting mission as an additional user mission so as to determine an attack right or an avoidance right as collective intelligence of multiple parties. Based on the voting results, the contents according to the attack and avoidance rights may be reflected.

When the user uses the attack right to the opposing team, the user terminal (200) receives attack right use information and transmits it to the game server (100). When receiving the attack right use information from the user terminal of a specific team, the game server may determine whether the use of the attack right is possible, approve it, adjust the route information of the opposing team, and transmit the related information to the driving terminal. The driving terminal receives the adjusted route information and applies it to driving of the autonomous vehicle.

In order for the driving terminal (300) to apply the route information to the driving of the autonomous vehicle, at least one is configured among a first method of integrating the autonomous vehicle and the driving terminal into one, a second method of connecting to the autonomous vehicle through network communication means and transmitting and receiving adjusted route information to allow the autonomous vehicle to reflect adjusted route information in route information, and a third method of outputting the adjusted route information in a form of video or sound data that can be recognized by a person related to the driving of the autonomous vehicle or by an autonomous vehicle.

When the driving terminal (300) and the autonomous vehicle exist as one system, the information of a memory or storage device storing the route information of the autonomous vehicle may be replaced or changed.

The game server (100) may be configured to provide route information from the start to the end to the specific driving terminal (300). As another method, the game server (100) divides the entire route information into several section units and provides the route information of the sections to be completed sequentially to be transmitted to the driving terminal (300).

In order to determine the completion in the game server, it is common to determine that the driving terminal (300) has completed specified route information when some or all of the driving targets of the specified route information are achieved. It may be determined that the driving terminal has completed the route information when arriving at the final target point. In this case, it is possible to convert the results of performance of driving missions or user missions performed when the route information is completed, into a score.

In the manner in which the game server (100) determines the completion, the game may be configured to determine that the driving terminal (300) has completed the route information when the driving terminal (300) has driven a predetermined distance or more or when achieved a score set as a target value or completed a participant mission or a driving mission.

The game server (100) may be configured to determine whether the driving terminal (300) has completed the driving according to the configuration manner of each game.

In a case where the game server (100) is configured to transmit route information consisting of several sections to the driving terminal (300) in a stepwise manner, when a time delay penalty is applied to a specific autonomous vehicle, it is also possible to configure a method of providing route information of the next section to the driving terminal (300) as late as the delayed time after the route information of a specific section is completed.

The game server (100) configures route information of a specific driving terminal by further adding mission information. The mission information to be performed by an autonomous driving unit or a driving terminal includes things that can be done in the field, such as a method of arriving through a specific location, a method of taking a picture of a specified target, and a method of delivering a specific object.

The game server (100) additionally includes a driving mission determination function that determines whether the driving mission is a success or failure or converts a result of mission performance into a performance scores when a driving mission of a specific driving terminal has been completed. In the case of the mission of taking a photo, a function of automatically recognizing and determining photos is included. Alternatively, a referee may make a decision and information input by the referee is received through the driving terminal to use it for determining the result of performing a specific driving mission.

The game server (100) further adds information on the virtually set fuel information and the maximum driving speed to the route information. Here, the fuel information is not actual fuel information of an autonomous vehicle.

The fuel information enables the autonomous vehicle to determine whether to stop and resume driving, or what the maximum driving speed is to be. When driving is continuously performed according to the specified route information, the fuel is deducted. In an actual racing game, fuel information may be displayed in points or other formats.

The autonomous vehicle is configured to drive at a speed whichever is lower between the maximum driving speed of the route information and the legal maximum driving speed of a road on which the autonomous vehicle actually drives.

When the fuel is equal to or greater than a certain amount, the maximum driving speed of the autonomous vehicle is specified as being appropriate, and when the fuel is less than the certain amount, the maximum driving speed is adjusted to be lowered.

The game server (100) transmits a participant mission to the user terminal (200) to allow people participating in the game to be prevented from running out of fuel. When a participant performs input related to performance of a specified mission using a user terminal, the user terminal (200) transmits relevant information to the game server (100) and the game server replenishes the specified amount of fuel.

Missions that the game server (100) suggests for participants to participate for refueling may include solving quiz, viewing advertisements, inputting specific data, taking mission photos, and the like. Depending on whether a condition is satisfied, the fuel may not be replenished or the amount of fuel to be replenished may be adjusted.

The game server (100) preferably displays fuel as a number in units of quantity, but may also display the fuel as the number of items such as points, hearts, and stars. It is also preferable to operate fuels, points, items, or the like in multiple ways.

The game server (100) transmits the driving state information and a part or all of the route information of the autonomous driving unit participating in the racing game to the user terminal (200). The user terminal (200) receives and outputs the driving state information and route information.

The game server (100) transmits video materials related to the progress of the game to the user terminal.

The user terminal (200) receives the video materials from the game server (100) and displays it on a display so as for the participants to see. When there is information related to an obstacle of virtual reality in the video material, the obstacle is displayed on the display of the user terminal (200) to be visible, and information related to mission performance of users for removing the obstacle is received and transmitted to the game server (100).

When it is assumed that the obstacle is a rock, people may use a method of displaying a video for dragging down the rock or breaking the rock by hammering the rock with touches on the screen.

When it is assumed that the obstacle is a cat, a participant takes a picture of the cat and transmits it, and the game server (100) may receive a cat picture from a plurality of participants and then the cat obstacle disappears.

In order to remove the obstacle, it may be additionally configured that the participant pays a price by paying a certain electronic money or points.

When the obstacle is not removed, the participant or team participating in the racing game will be penalized. Penalties include disqualification, termination of the game, or suspension of a certain period of time.

When the autonomous vehicle is a general vehicle driven by a person or when a person performs input to the autonomous vehicle, the adjusted route information is output in a way that can be recognized by a person.

When the autonomous vehicle of a specific team receives a driving attack from the opposing team, it is preferable to inform the user terminals of the team members of the specific team of information related to the use of the attack right of the opposing team.

When there are three or more autonomous vehicles and two or more opposing teams, the user terminal (200) may be configured to further include a function of selecting an opposing team to attack.

The game server (100) provides mission information to the user terminal (200) so as to secure an item used for an attack right of the opposing team. When the user completes the mission, the game server (100) grants an attack right to the corresponding team or the corresponding participant, and transmits information on the attack right to the user terminal (200).

The user terminal (200) is provided with an input tool to receive information on the attack right, output it for use by the user, and use the attack right. When the user inputs information using the attack right, the user terminal (200) transmits information on the target autonomous driving unit to which the attack right is to be applied and information related to the attack right to the game server (100).

The game server (100) finally configures a step of determining a result of the autonomous driving unit-based racing game. The game server (100) determines the result of the racing game according to a method of determining the ranking based on the driving results of a number of autonomous vehicles, a method of determining victory and defeat with respect to competitors, and a method of determining success or failure of the driving results.

The game server (100) has a function of determining a driving result of a specific driving terminal. The determination of the driving result may be performed for each section unit, and may be performed in a state in which the sections of multiple units and all driving sections are completed. The determination of the driving result in the game server is performed by determining whether a driving target of a specific target point is accomplished or whether a driving mission is succeeded or by performing conversion into a score.

The game server (100) reflects the performance result of the driving mission of the autonomous driving unit matched to a specific participant in determination of the driving result. That is, the driving result is determined by reflecting the result of performing the driving mission well or completing the driving in a short time.

The game server (100) determines the game result as the final determination of driving result based on whether a specific participant wins, succeeds, acquires a certain score, is selected for receiving a specific product, or gets a specific ranking.

The game server (100) reflects the driving result in the game result determination by quantifying a score for passing the driving mission, the time taken to complete the driving mission, the degree of completion of the route information, and the degree of achieving the driving goal in some or all sections or by determining failure or success.

It is preferable that the game server (100) manages the scores by separately reflecting the result of performing the user mission for each specific participant or team. In addition, scores are managed by reflecting the performance result of user missions by each participating team. In addition, the performance results of the user mission of a specific user or team may be reflected to determine the result of the racing game.

The game server (100) determines the game result and announces the game result in such a way that the ranking or the success or failure of the game of the autonomous driving unit of the participating team or the participant matching the autonomous driving unit is announced. Information on the game result is announced by posting it on the Internet or transmitting it to the user terminal (200).

The game server (100) further includes a step of adjusting route information of a specific driving terminal using collective intelligence by collecting judgments of a plurality of participants constituting a team. Here, the collective intelligence is applied in such a manner to analyze the opinions of several participants in real time and reflect them in the racing game. The simplest method is to allow a user to select a competitor through a voting mission and select an attack right to use. Alternatively, it is also preferable to support to select one of several driving conditions of a host autonomous driving device.

Another method for adjusting the route information using the collective intelligence of the game server (100) is to use a quiz mission. It is a method to suggest different words that contain specific letters or spelling and give an attack right or replenish virtual fuel to a team that succeeded first.

Participants endeavor such that a driving route advantageous to their autonomous driving units are applied while performing a user mission. The performance of the user mission may be to give a correct answer for a specific quiz question, perform a specific action, or mimic sound. The performance of a user mission by the participant may be a method of performing input to a user terminal using a specific input device. An input method may be configured by using a method of shaking a user terminal up and down or left and right, a method of clicking a specific icon displayed on the display of a participant terminal, and the like.

FIG. 2 shows a schematic diagram of a user terminal. The schematic diagram of FIG. 2 is a user terminal using a smartphone, and a touch pad on which a display and an input function operate together is displayed on the screen. Separately, input functions such as a microphone and a camera are configured, and a GPS function and a network function are further included. In general, when using a smartphone, these functions are prepared.

The user terminal (200) has a live show section displaying a real-time streaming area received from a broadcast relay device and a driving terminal or a game server. In addition, it can be seen that there is a section displaying a user mission and a section in which a mission performance result of the user mission is input.

The user terminal (200) displays the route information and the driving state information of the driving terminal connected to the specific autonomous vehicle participating in the racing game on the display such that the participants can recognize it. The vibration function of the smartphone is used to represent vibrations due to collision or irregularities in the driving state information.

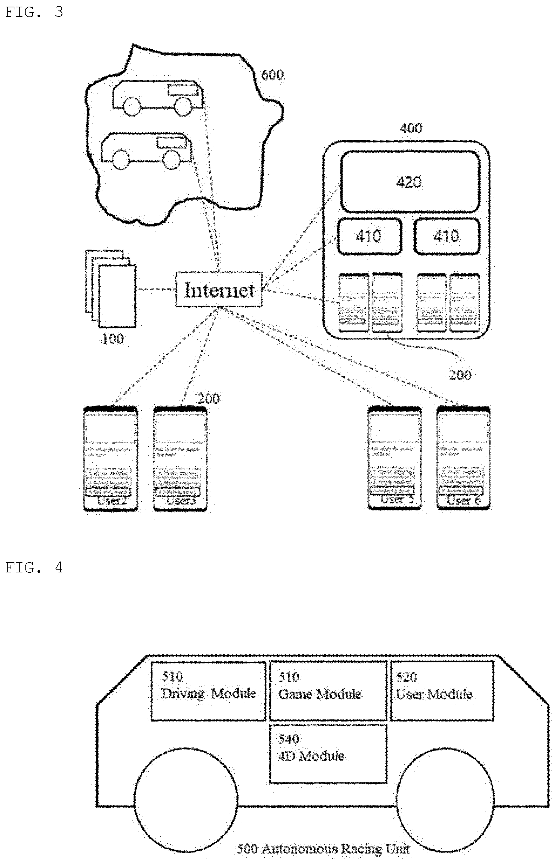

FIG. 3 shows another embodiment of the present invention, which further includes a game studio (400) and a game area (600). The game studio further includes a model device (410) and a broadcast relay device (420) corresponding to each autonomous vehicle.

The model device (410) and the broadcast relay device (420) are individually connected to the game server (100), the driving terminal (300), or the user terminal (200) through a network communication means, and transmit and receive data.

The model device (410) is manufactured to be boarded by a person. The model device further includes a driving device (411) capable of expressing 4D effects such as vibration, direction change, acceleration, deceleration and shock, collision, sound and altitude change.

The model device (410) receives the driving state information of the autonomous driving unit from the game server (100) or the driving terminal (300) and outputs the resulting 4D effect through the driving device (411). The autonomous driving unit outputs driving state information such as direction change, rising and falling, posture change, shock, and collision according to the actual driving state.

In a racing game, whether a user mission is completed by a specific user may be determined through a referee's judgment that determines whether a specific user has performed a mission. In this case, the referee inputs information including whether or not the mission is performed to the user terminal, the user terminal sends it to the game server, and the game server receives the information and reflects whether the mission is performed.

When the game server (100) utilizes the referee regarding the user mission, it is preferable to allow the referee to input an answer after passing the authentication process to a specific user terminal or to configure a separate user terminal (200) to be used by the referee.

In the game studio (400), the user terminal may be positioned such that the participant can participate in the game, and in this case, the user terminal (200) is also connected to the server through a network communication means.

The video relay device (420) includes a display module and a speaker module to output video and sound to people inside the studio. The video relay device outputs video information captured by the driving terminal (300) or video information received from a game server.

The video relay device (420) may further include a camera module and a microphone module.

The camera module and the microphone module record a broadcast video including cast members participating in a racing game in the studio, process the acquired video or sound, and transmit it to the game server (100) or the user terminal (200) through a network means, thus allowing viewers to watch broadcasts about the racing game.

The broadcast relay device (420) transmits a video captured in a game studio or a video including information related to various racing games to a public TV, cable, and Internet TV. When transmitting to the Internet TV, it is preferable that the game server (100) additionally includes a separate streaming server.

The game server (100) transmits information related to mission performance information such as a user mission or a driving mission to the broadcast relay device (420). The broadcast relay device (420) visualizes the data related to the mission performance information in the format of a graph or a table, and transmits additionally-configured video material to be received by the user terminal.

The broadcast relay device (420) generates and streams a video related to the progress of the game by using a video acquired in the studio, a video transmitted by the driving terminal, route information, state information, or ranking information of the game server. The broadcast relay device (420) transmits the video related to the progress of the game to the user terminal (200) in a manner of transmitting the video via the game server (100) or direct transmission.

The user terminal (200) is configured to directly receive and display streaming video of an Internet TV through a network such that participants can watch it. In this case, the user terminal may be configured to watch TV broadcasts using an additional device separated as a separate function.

It may be configured that when game broadcasting is in progress, instead of the game server (100), the broadcast relay device (420) to perform transmission to the user terminal (200). When using the broadcast relay device (420), the user terminal may be configured as a single device, but it may also be configured as a user terminal dedicated for participation which may be exclusively used for use separate from a device such as a TV. In this case, the broadcast relay device (420) is regarded as the game server (100).

The racing game may be configured so that only cast members in the studio may participate therein, and may be configured such that a person in the studio and a person watching the broadcast constitute a team and participate therein.

The user terminal (200) receives driving state information or route information and outputs a part of the information for the participants' understanding.

Another embodiment for game broadcasting in which a large number of unspecified viewers participate will be described with reference to FIG. 3.

In a game studio, there are cast members, a host, and audiences participating in racing games. People who use user terminals to participate in racing games become audiences or cast members.

In each family, viewers who want to participate in the racing game install an application that performs functions of a user terminal on user terminal devices such as their smart phones or tablets and participate in the racing game.

The game studio's cast members are popular celebrities, and viewers may be their fans. In the game studio, the cast members constitute two teams, and the viewers may choose their favorite team to participate in the game.

The game server (100) is configured to select a part of the route information by using collective intelligence as a kind of penalty or driving mission for a specific team. That is, it is possible to present a voting mission in which multiple participants vote to select a specific target point or a left or right turn at a crossroad to be appeared next to all user terminals (200) belonging to a specific team, and determine route information or a direction as a result thereof.

Using the user terminal (200), users vote for the voting mission, and the game server (100) analyzes the voting results and adjusts the route information of a specific team according to the voting results selected by more people. The specific team may be a team of a specific participant or a team of a competitor.

The game server (100) additionally assigns and calculates a score related to an activity to a user. That is, in the case of participating in a user mission or giving a correct answer for a specific quiz, scores are accumulated for individual participants and an individual participant having the highest score is finally rewarded.

The game server (100) is configured such that the individual participant is rewarded according to a method selected from ranking announcement, winner announcement, online gift certificate or souvenir payment notice, prize payment notice, prize payment, gift payment, etc.

It is preferable that the game server (100) constructs and produces various types of games as user missions such that viewers can voluntarily contribute to the victory of a team to which they belong. Here, a quiz mission to solve a quiz, a voting mission to vote, a photo mission or an action mission, or the like may be applied.

The game server (100) is preferably installed in an independent Internet space, but for implementation of the present invention, the game server (100) may be configured to be included in a user terminal or a driving terminal.

It is preferable that the game server, the user terminal, the driving terminal, the model device, and the like are configured independently with a separate device and a SW performing a function, and preferably transmit and receive a variety of information through a network communication means. On the other hand, two or more devices separated in functional units may be connected through the network communication means to perform a single function.

The game server may be configured to include several devices separated from each other according to detailed functions.

In the present invention, the game server, the user terminal, the driving terminal, the model device, the autonomous driving unit, and the like may be configured to operate on one device in which two or more functions are integrated as needed.

When one device performs each functions, the game server, the user terminal, the driving terminal, and the model device should be recognized as one function module or an operational part, not as an independent device. In the present invention, the physical configurations of the game server, the user terminal, the driving terminal, and the model device are not important.

In the present invention, when two or more functional units among the game server, the user terminal, the driving terminal, the model device, the autonomous driving unit, or the broadcast relay device are configured to be integrated into one system, transmitting or receiving data between the two functional units may be achieved by transmitting or receiving related materials by sharing a network communication means or a memory or a storage space, or through communication between processors.

Another embodiment of the present invention will be described with reference to FIG. 4.

FIG. 4 is a schematic diagram of a racing autonomous vehicle (500) in which all functions of a game server, a user terminal, and a driving terminal of the present invention are configured as basic elements. Here, the game server, the user terminal, the driving terminal, or the like will be composed of modules or function units that perform the functions.

The racing autonomous vehicle is designed to perform a game independently, and is implemented to provide a racing game such that persons who actually board the same vehicle are members of a team, and a record competition with a team which participates in the game at the same time or participated before is made.

In the racing autonomous vehicle (500), the game server may be implemented on the racing autonomous vehicle as a single function module, or may be implemented separately as a separate game server to transmit and receive materials to and from the racing autonomous vehicle (500) through a network communication means. In FIG. 4, a driving module, a game module, and a user terminal are used in the same sense as the driving terminal, the game server, and the user terminal, respectively, and perform the same roles. When passengers to participate in the game are on board in a racing device capable of autonomous driving and start a racing game, the racing device displays route information and allows the passengers to perform a user mission. When the mission performance information is input according to the performance of the user mission, the racing device adjusts the route information and drives according to the route information. The driving is completed, and the game result is determined based on a driving result, the user mission, and the driving mission.

Such an autonomous driving racing device may be provided as a game for enjoying tourism by using collective intelligence in a family unit in famous tourist attractions.

The racing autonomous vehicle (500) may further include a 4D module (540). The 4D module outputs various 4D effects expressed in augmented reality in the autonomous driving unit racing game. The 4D effects such as shock, rollover, vibration, and shaking may be output.

Although not shown in FIG. 4, an autonomous driving unit (500) preferably further includes an output function such as a display for expressing augmented reality.

In another embodiment, the racing autonomous vehicle (500) is preferably configured such that the game server and the user terminal are configured as independent devices. The user terminal includes a driving module, and the user terminal serves as a driving terminal. Here, the user terminal is the user's smartphone, and the game server is located on the Internet, so that the user receives information related to a racing game through the game server and a boarded participant or participating team may perform the user mission and enjoy the racing game.

In the present invention, 'driving state information' and 'route information' do not necessarily constitute all of the relevant detailed information disclosed in the present specification, but are combined in such a way as to include only part of configuration information necessary to configure an actual service. Also, outputting these information causes all or part of the included information to be output.

### Industrial Applicability

The present invention is intended to be used in the broadcasting business and entertainment business, which is a business group of KSEEK Co., Ltd. The KSEEK Co., Ltd. has an interactive broadcasting platform that participates in quizzes and questions with a large number of people participating at the same time, and is preparing a remote racing game based on an autonomous driving vehicle as an expansion project in this area.

Autonomous driving vehicles will be supplied to the market in the next 5 to 10 years, and many automakers, as well as platform companies such as Google, Apple, and Amazon, as well as companies such as Samsung Electronics and LG Electronics are showing great interest. It is time to develop entertainment using autonomous driving units because the consumption of vehicles is reduced and the time required for passengers to drive is eliminated. By connecting to TV broadcasting format development, we intend to integrate it into a business that produces results worldwide. It is expected that the racing device using the racing game method based on the autonomous driving vehicle can be provided as a racing game that passes through a number of designated target points by using collective intelligence in a family unit at tourist spots.

## Claims

1. A method for providing a racing game using an autonomous driving unit, comprising:
outputting route information of a specific autonomous driving unit (500) participating in the racing game;
receiving mission performance information for a user mission which a participant or a team is to perform;
adjusting the route information by referring to the mission performance information;
applying the adjusted route information to driving of the autonomous driving unit (500); and
determining a result of the driving of the participant or the team.

2. The method of claim 1,
wherein the user mission is a voting mission and the mission performance information is a result of voting of a plurality of participants, and
wherein the adjusting of the route information includes adjusting the route information by using collective intelligence of the plurality of participants.

3. The method of claim 1 or 2, further comprising:
acquiring, by a driving terminal (300), a video information and transmitting the video information to a game server (100), a user terminal (200) or a broadcast relay device (420).

4. The method of claim 3, further comprising:
receiving and outputting, by the broadcast relay device (420), the video information; and/or
receiving and outputting, by the user terminal (200), the video information.

5. The method of any one of claims 1 to 4, further comprising:
outputting, by a driving terminal (300) or a user terminal (200), driving state information; and/or
outputting, by a model device (410), a 4D effect of driving state information.

6. The method of any one of claims 1 to 5, further comprising:
receiving, by a driving terminal (300), virtual driving state information; and
outputting, by the autonomous driving unit (500) connected to the driving terminal (300), a 4D effect corresponding to the virtual driving state information.

7. The method of any one of claims 1 to 6, further comprising:
receiving, by a user terminal (200), video information from a game server (100); and
outputting, by the user terminal (200), the video information.

8. The method of any one of claims 1 to 7, further comprising: giving an attack right or an avoidance right to a specific participant or team through a user mission.

9. The method of any one of claims 1 to 8, further comprising:
reflecting a result of driving to determination of a game result; and/or
reflecting, by a game server (100), a performance result of a specific driving mission or a performance result of a specific user mission driving to determination of a game result; and/or reflecting, by a game server (100), a performance result of a user mission given to a specific participant or team to determination of a game result.

10. The method of any one of claims 1 to 9, further comprising adjusting, by a game server (100), route information of a specific driving terminal as a user or team receives a penalty or uses an attack right.

11. A racing device for providing a racing game using an autonomous driving unit, wherein the racing device comprises:
means for outputting route information for the racing game;
means for adjusting the route information based on mission performance information of a user mission;
means for performing autonomous driving based on the adjusted route information;
means for determining a result of driving as to whether driving is performed according to the route information; and
means for determining a game result of the racing game.

12. The racing device of claim 11, wherein the racing device comprises means for outputing a 4D effect of driving state information.

13. A racing game system for providing a racing game using an autonomous driving unit, comprising:
a game server (100) configured to output route information for the racing game, adjust the route information based on mission performance information for a user mission, transmit the adjusted route information to the autonomous driving terminal, determine a result of driving as to whether driving is performed according to the route information, and determine a game result of the racing game; and
an autonomous driving terminal (300) configured to receive the adjusted route information, and apply the adjusted route information to autonomous driving of the autonomous driving unit (500).

14. The racing game system of claim 13,
wherein the game server (100) is configured to transmit driving state information to a model device (410), and
wherein the system further comprises a model device (410) configured to receive the driving state information and output a 4D effect.

15. The racing game system of claim 13 or 14, further comprising: a user terminal (200) configured to receive user mission performance information to transmit the user mission performance information to the game server (100).
